# EUROPEAN PATENT APPLICATION

(11) **EP 4 394 269 A1**
(43) Date of publication of application: **03.07.2024**
(21) Application number: 23220795.1
(22) Date of filing: 29.12.2023
(51) Int. Cl.: F24F 5/00, F24F 11/83, F24F 11/84, F25B 49/02, F28D 20/02, F28F 3/02

(54) **CONTROLLING INDOOR TEMPERATURE USING RADIATION FROM ENERGY STORAGE USING PHASE CHANGE MATERIAL**

(30) Priority: 30.12.2022 US 202263436374 P
(71) Applicant: Solaredge Technologies Ltd., Herzeliya 4673335 (IL)
(72) Inventor: BERSON, Yuval, Herzeliya 4673335 (IL)
(74) Representative: V.O.

(57) **Abstract**

Various implementations described herein are directed to a heat pump system for cooling and/or heating a room via radiation. The heat pump system may include an outdoor unit, an indoor unit, and at least one pipe comprising a refrigerant. The pipe may provide fluid communications between the indoor unit and the outdoor unit. The indoor unit may comprise a radiating storage configured to absorb heat from the refrigerant and radiate the absorbed heat.

## Description

### BACKGROUND

Many homes are located in areas around the world where the temperature may be too hot or too cold for comfortable living. Today, a common solution for an uncomfortable temperature and/or environment inside a building may be a heat pump. Heat pumps are electronic appliances that may be used to maintain one or more rooms of a building at a desired temperature via a cooling cycle and a heating cycle with which the rooms in the building may be cooled or heated, respectively. Air conditioners may be thought of as a specific type of heat pump that has only a cooling cycle to move heat in one direction out of the building.

Air conditioners and heat pumps may comprise an indoor unit that is mounted on a wall inside the building and connected via a tube or pipe to an outdoor unit. The tub or pipe may be configured to circulate a refrigerant between the indoor unit and the outdoor unit, which is used to transfer heat and cool or heat air within the internal unit. The cooled or heated air may travel from the heat pump into the building through a vent in the indoor unit of the air conditioner. Alternatively, building that have a central air conditioning or heat pump system may have a system of ducts and vents configured to direct the cooled or heated air into one or more different rooms in the building. Some air conditioners and heat pumps may be operated with an air-to-air heat pump technology, which may include different styles, such as a high wall, a low wall, a cassette (ceiling-mounted), or through vents placed on the floor, ceiling, or walls, for example, using one or more ducts.

### SUMMARY

The following presents a simplified summary of various concepts disclosed herein. This summary is not an extensive overview and is not intended to identify key or critical elements or to delineate the scope of the claims. This summary is not intended to limit or constrain the present disclosure.

Systems and methods are described that may be configured to control indoor temperature of a building using a heat pump system comprising one or more radiating storages. The heat pump system may comprise an outdoor unit, an indoor unit, and at least one pipe connecting the outdoor unit to the indoor unit. The pipe may transfer a refrigerant between the indoor unit and the outdoor unit. The indoor unit may comprise one or more radiating storages configured to transfer heat to and from the refrigerant (e.g., by radiation, convection, and/or conduction) and/or transfer heat to a room (e.g., by radiation, convection, and/or conduction). The at least one pipe is thermally coupled (e.g., in contact) with the one or more radiating storages such that the refrigerant in the at least one pipe is in thermal communication with the radiating storages. Additionally, the radiating storages may be configured to transfer heat (e.g., by radiation, convection, and/or conduction) to and from a surrounding of the indoor unit and heat the refrigerant.

The heat pump system may be configured for defrosting the outdoor unit of the heat pump system. The defrosting method may include switching the heat pump system from a heating mode to a cooling mode until the temperature of the outdoor unit rises above a threshold temperature. The heat pump system is switched from the cooling mode to the heating mode after defrosting.

The heat pump system may be configured for switching between a heating mode and a cooling mode. Switching between the two modes may include: (i) predicting a future time of a switching between a heating mode and a cooling mode of the heat pump system; (ii) measuring a room temperature of the room that the radiating storage is placed; (iii) calculating an amount of time required for depletion of the thermal energy of the radiating storages from a first temperature of the radiating storages in the heating mode to the room temperature; (iv) initiating depletion of the thermal energy, at a start time, based on the predicted future time and the calculated amount of time for depletion of the thermal energy of the radiating storages; and (v) at the predicted future time, switching the heat pump between the heating mode and the cooling mode.

The heat pump system may include a user interface, at least one temperature sensor, and/or a controller configured to monitor temperatures using the temperature sensor, receive user settings from the user interface, and determine an operation mode of the heat pump system. The at least one temperature sensor may be positioned within the room. The at least one temperature sensor may be positioned in the indoor unit and/or the outdoor unit. The heat pump may include a second indoor unit, and wherein the controller may be configured to operate the second indoor unit.

The system may include one or more heat exchangers, wherein the one or more heat exchangers may include a fan configured to direct an air flow from the heat exchanger to a room, and the controller may be further configured to operate the fan. The indoor unit and/or the heat exchanger may include a second fan configured to direct an air flow from the radiating storage and into the room, and the controller is further configured to operate the second fan. The indoor unit may include a three-way valve connected to the least one pipe. The three-way valve is configured to control the refrigerant flow between the radiating storage and the heat exchanger, and the controller is further configured to operate the three-way valve. The indoor unit may include one or more vents positioned on one or more side surfaces of the indoor unit, thereby enabling the heat exchanger to direct air flow from and/or to the indoor unit. The controller may be configured to switch the heat pump system from a heating mode to a cooling mode, and/or from a cooling mode to a heating mode.

The indoor unit and the outdoor unit may be adjacently disposed. The system may be positioned on a wall of a room such that the indoor unit extends towards the interior of the room and the outer unit extends outside of the room.

The radiating storages may include a phase change material (PCM). The radiating storages may include any one or more of a plate, one or more fins and a cylinder. The indoor unit may include a removeable decorative sleeve. The decorative sleeve may be configured to clip onto the radiating storage. The decorative sleeve may include one or more slits configured to expose the radiating storage.

The radiating storages may include at least one storage portion configured to direct heat (e.g., by radiation, convection, or conduction). The phase change material may have a melting temperature within the range of 45 to 60 degrees Celsius. The phase change material may have a melting temperature within the range of -5 to 10 degrees Celsius. The phase change material may be an adaptable phase change material including an adaptable melting temperature. The phase change material may include a paraffin wax, a salt, Sulphur, potassium, water, and/or red phosphorus. The phase change material may be organic, inorganic or a combination thereof. The radiating storage may include a plurality of radiating storage components of different types of phase change materials.

In the heat pump system, the energy that the radiating storage transfers (e.g., radiates, conveys, or conducts) in an hour may range between 0% and 50% of an energy rating (or British Thermal Units) of the heat pump system. Accordingly, about 0% to 50% of heat flow from the heat pump system may be provided by the radiating storages.

The method may include detecting a need for a defrost cycle according to at least one of a clock, a timer, or an outdoor temperature sensor. The predicting of the future time of switch may be based on an amount of thermal energy released by the radiating storage when changing from the first temperature to the second temperature and the thermal conductivity between the radiating storage and the room. The method may include monitoring a plurality of switching times between the heating mode and the cooling mode in the room, and determining the amount of time required for depletion of the thermal energy is based on the plurality of switching times.

### BRIEF DESCRIPTION OF THE DRAWINGS

The present disclosure is illustrated by way of example and is not limited in the accompanying figures in which like reference numerals indicate similar elements and in which:
Figure 1 shows a schematic illustration of a heat pump system comprising an indoor unit and an outdoor unit.
Figure 2 shows a schematic illustration of a heat pump system comprising an indoor unit and an outdoor unit.
Figure 3A and Figure 3B show a cross section and isometric view of a first radiating storage, respectively.
Figure 3C and Figure 3D show isometric and orthogonal views of a second radiating storage, respectively.
Figure 3E and Figure 3F show isometric and orthogonal views of a third radiating storage, respectively.
Figure 3G and Figure 3H show isometric and orthogonal views of a fourth radiating storage, respectively.
Figure 3I and Figure 3J show isometric and orthogonal views of a fifth radiating storage, respectively.
Figure 3K and Figure 3L show isometric and orthogonal views of a sixth radiating storage, respectively.
Figure 3M and Figure 3N show isometric and orthogonal views of a seventh radiating storage, respectively.
Figure 4 shows a schematic illustration of a heat pump system during a cooling cycle.
Figure 5 shows a schematic illustration of a heat pump system during a heating cycle.
Figure 6 shows a schematic illustration of a heat pump system during a defrost cycle.
Figure 7 shows a schematic illustration of a heat pump system comprising a plurality of radiating storages.
Figure 8 shows a schematic illustration of another heat pump system comprising a plurality of radiating storages.
Figure 9 shows a flow chart for a method of switching between a heating mode and a cooling mode of a heat pump system.

### DETAILED DESCRIPTION

In the following description of, reference is made to the accompanying drawings, which form a part hereof, and in which are shown, by way of illustration, various examples of the disclosure. It is to be understood that the examples shown and/or described are non-exclusive, and other examples may be practiced, and structural and functional modifications may be made without departing from the scope of the present disclosure.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Systems and methods disclosed herein may be configured to operate a heat pump comprising one or more radiating storages. The radiating storages may be configured to receive heat directly from the refrigerant of the heat pump and transfer (e.g., by radiation, convection, or conduction) the received heat to a room, thereby heating the room. Alternatively, or additionally, the radiating storage may be configured to receive heat from the room and transfer it directly to the refrigerant of the heat pump. The heat pump may be an air-to-air heat pump, thus increasing the efficiency of the heat transfers. Alternatively, the heat pump may be an air-to-water heat pump, a ground source heat pump, a water source heat pump, a solar heat pump, etc.

The heat pump may include an outdoor unit and an indoor unit, where the indoor unit may be placed inside building (e.g., in a room or a building) and may comprise one or more radiating storages. The indoor unit may be modular and/or customizable, thereby fitting the heating and/or cooling needs of the building (such as, e.g., a larger radiating storage for a larger room, or for a smaller room in an extreme climate). The radiating storages may be esthetically customizable, for example, by having a changeable cover. The changeable cover may include a preexisting design and/or a custom-made design for a specific room.

The one or more radiating storages may be a thermal buffer storage. The one or more radiating storages may include a material configured to store energy therein. The one or more radiating storages may be configured to radiate heat. The amount of energy stored in the one or more radiating storages may be controlled by changing the material therein and/or the amount (mass, density and/or volume) of the material in the one or more radiating storages. The amount of energy radiated from the one or more radiating storages may be controlled by changing the material therein and/or the amount (mass, density and/or volume) of the material in the one or more radiating storages. The amount of energy radiated from the one or more radiating storages may be controlled by changing the temperature of a fluid flowing through one or more pipes in vicinity of the one or more radiating storages. The one or more radiating storages (or the one or more thermal buffer storages) may be a thermal buffer between the fluid flowing through the one or more pipes and the room in which the radiating storages is placed (and is configured to heat and/or cool).

The indoor unit may include an indoor heat exchanger including one or more fans. The indoor heat exchanger may be configured to direct air flow out of the indoor unit, such that air is directed from the indoor unit towards the sides of a room, thus preventing air from flowing towards the center of the room while transferring (e.g., by radiation, convection, and/or conduction) heat towards the center of the room. The indoor unit may include a three-way valve configured to operate and control the indoor heat exchanger. The three-way valve may be connected to the outdoor unit at a first end. The three-way valve may be coupled to the radiating storage at a second end. The three-way valve may be coupled to the indoor heat exchanger at a third end. The three-way valve may be operated at different rates, thereby enabling control of the amount of heat exchanged (from and/or to the room and to and/or from the refrigerant in the heat pump) using the indoor heat exchanger. The three-way valve may be controlled using a controller, and the controller may be configured to operate the three-way valve in order to obtain a specific ratio between the amount of heat transferred (into and/or out of the room) using the radiating storages and the amount of heat transferred (into and/or out of the room) using the indoor heat exchanger.

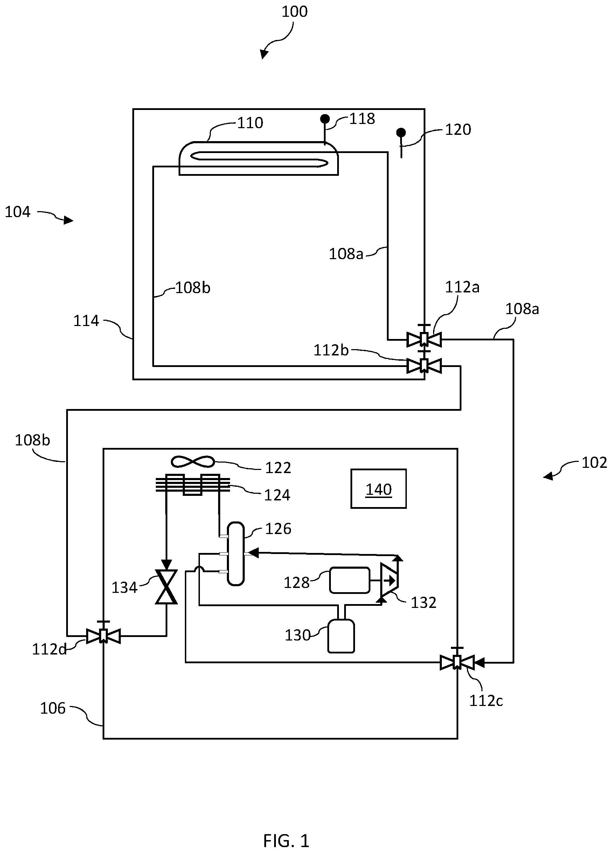

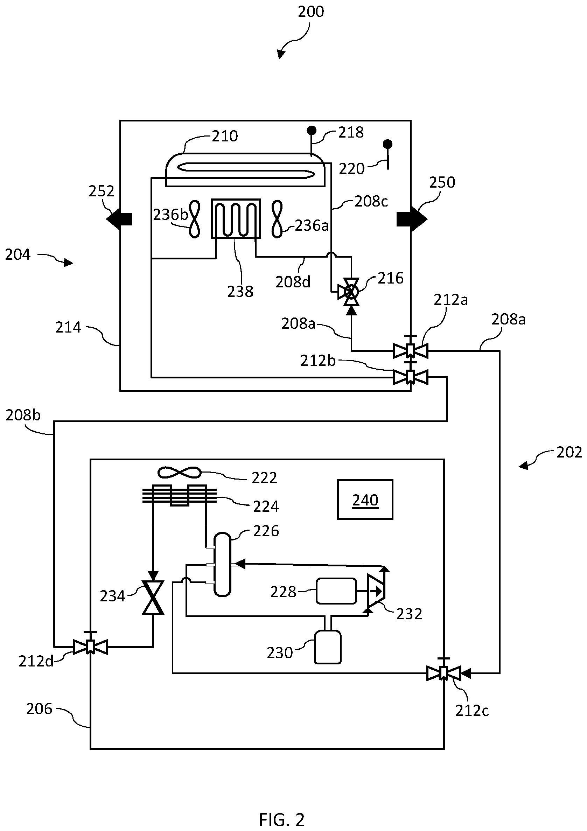

Reference is now made to Figure 1, which shows a schematic illustration of a heat pump system 100 comprising an indoor unit 104 and an outdoor unit 106, and to Figure 2, which shows a schematic illustration of another heat pump system 200 comprising an indoor unit 204 and an outdoor unit 206. The heat pump system 100/200 may be configured to heat or cool a temperature-controlled building. While only one indoor unit and one outdoor unit are shown in Figures 1 and 2, multiple indoor units and/or outdoor units may be present for heating or cooling a building. The building may include a closed vicinity, such as a room in an apartment, an apartment or a portion thereof, a house or a portion thereof, a building or a portion thereof, a room within the building, such as a storage room, an office, a warehouse, a laboratory, a server room, a commercial building, a hotel, a safe room, etc. The indoor unit 104/204 and/or a heat transferring device of the indoor unit 104/204 may be modular, custom-shaped, and/or custom-sized. Thus, the indoor unit 104/204 and/or the heat transferring device of the indoor unit 104/204 may be have a size, shape, and/or outer exterior design configured for a specific room where the indoor unit 104/204 is located.

The indoor unit 104/204 may include a radiating storage 110/210 configured to, store, and transfer (e.g., by radiation, convection, or conduction) heat. The heat pump systems 100/200 may include one or more pipes 108a/108b/208a/208b/208c/208d configured to provide fluid from the indoor units 104/204 to the outdoor units 106/206 and vice versa. The one or more pipes 108a/108b/208a/208b/208c/208d may be in contact with the radiating storages 110/210. Thus, heat can be transferred between the temperature-controlled area and the outdoor unit 106/206 by transfer of heat to and/or from the radiating storages 110/210. The heat pump systems 100/200 may include controllers 140/240 configured to operate and/or control the operation of the heat pump systems 100/200.

The one or more pipes 108a/108b/208a/208b/208c/208d may carry a refrigerant. The indoor units 104/204 may include one or more heat transferring devices configured to transfer heat from the room and directly to the refrigerant in the pipes 108a/108b/208a/208b/208c/208d, such as during a cooling cycle of the heat pump systems 102/202. The one or more heat transferring devices may be configured to transfer heat directly from the refrigerant in the pipes 108a/108b/208a/208b/208c/208d into the room, such as during a heating cycle of the heat pump systems 100/200. The one or more heat transferring devices may include radiating storages 110/210 configured to absorb and emit heat and/or an indoor heat exchanger 238 described in greater detail below.

The heat pump systems 100/200 may be configured to transfer heat, using the refrigerant in the pipes 108a/108b/208a/208b/208c/208d, from the outdoors to the room or vice versa, thereby creating a temperature-controlled area in the room. The heat pump systems 100/200 may be air-to-air heat pump systems. The heat pump systems 100/200 may be configured to transfer heat from the air surrounding the outdoor units 106/206 to the air surrounding the indoor units 104/204. The one or more pipes 108a/108b/208a/208b/208c/208d may be configured to provide fluid communication (e.g., enable fluids such as refrigerant to flow) between the indoor units 104/204 and the outdoor units 106/206. The one or more pipes 108a/108b/208a/208b/208c/208d may transfer the refrigerant between the outdoor units 106/206 and the indoor units 104/204. Thus, the refrigerant flowing within the one or more pipes 108a/108b/208a/208b/208c/208d transfers heat from the air surrounding the outdoor units 106/206 to the air surrounding the indoor units 104/204 at least by transfer of the heat from/to the radiating storages 110/210. Advantageously, an air-to-air heat pump may be more efficient than other heat pumps, such as an air-to-water heat pump. Using an air-to-air heat pump may also provide quicker heat transfer than heat transfer of other types of heat pumps, such as, for example, water-to-air heat pumps.

The indoor units 104/204 may include housings 114/214 configured to contain at least some portions of the pipes 108a/108b/208a/208b/208c/208d and one or more heat transferring devices (e.g., the radiating storages 110/210). The housings 114/214 may include a plurality of walls configured to enclose around at least some portions of the pipes 108a/108b/208a/208b/208c/208d and the one or more heat transferring devices such that the pipes 108a/108b/208a/208b/208c/208d and the one or more heat transferring devices are not visible to people in the building. The housings 114/214 may include an esthetic and/or decorative exterior. The housings 114/214 may be configured to blend into the walls of the rooms of the building or decorate the rooms of the building. The housings 114/214 may include removeable decorative sleeves.

The housings 114/214 may be configured to house the one or more heat transferring devices (e.g., the radiating storages 110/210). The housings 114/214 may include one or more compartments configured to contain the one or more heat transferring devices. The housings 114/214 may include one or more recesses configured to contain the one or more heat transferring devices. The housings 114/214 may form covers for the radiating storages 110/210. The housings 114/214 may include one or more walls. At least a portion of the one or more walls of the housings 114/214 may be in direct contact with the radiating storages 110/210. Advantageously, having at least a portion of the one or more walls of the housings 114/214 in direct contact with the radiating storages 110/210 may enable a more efficient heat transfer from the radiating storages 110/210 to/from the room.

The one or more walls of the housings 114/214 may present openings for the pipes 108a/108b/208a/208b/208c/208d to exit the building and connect to the outdoor units 106/206. At least a portion of the one or more walls of the housings 114/214, which may be in direct contact with the radiating storages 110/210, may be thermally conductive. At least a portion of the one or more walls of the housings 114/214, which may be in direct contact with the radiating storages 110/210, may be thinner than the rest of the one or more walls of the housings 114/214, thereby enabling more efficient heat transfer between the radiating storages 110/210 and the rooms in the building.

The walls of the housings 114/214 may include one or more vents configured to enable fluid communication between the inside of the indoor units 104/204 with the outside of the indoor units 104/204 (e.g., inside a room of a building). The one or more vents may be positioned such that air flow towards the room is directed at an angle substantially perpendicular to the direction of transfer of heat to/from the radiating storages 110/210. The one or more vents may include one or more openings. The one or more vents may include fins configured to direct the air flow. The one or more vents may include slots and/or holes configured to enable air to flow out of the indoor units 104/204 without a specific direction. The one or more vents may be positioned near the one or more indoor heat exchangers (e.g., the indoor heat exchanger 238). The number of vents may correlate to the number of heat exchangers in the indoor unit. For example, the housing 214 may include a specific number of vents per heat exchangers. The one or more vents may be disposed at specific locations based on the position of the one or more heat exchangers.

For example, for a rectangular shaped housing (e.g., the housings 114/214), the rectangular shaped housing may include a back side configured to be disposed near a wall of a room (the wall may include the ceiling and/or floor or a wall perpendicular to the ceiling and/or floor). The front side of the rectangular shaped housing may be opposing the back side, and the right and left sides may be the walls of the housing positioned between the front side and the back side. Thus, for example, the radiating storages 110/210 may be in direct contact with the wall of the front side, and the one or more vents may be positioned on any other walls of the housing.

The housings 114/214 may be configured to be incorporated into a wall, or a recess of a wall of the room. At least a portion of the one or more walls of the housings 114/214 may be thermally non-conductive, thereby enabling the housings 114/214 of the indoor units 104/204 to be positioned abutting to a wall of a room safely.

The housings 114/214 of the indoor units 104/204 may include one or more modular portions configured to by modified in accordance with the specific heating or cooling requirements of the building (e.g., based on requirements of occupants or equipment within the building), to accommodate the shape or size of the room, or to include a decorative finish that can be changed with different styling of the interior design of the room. The one or more modular portions may include a plurality of housings, with one or more radiating storages 110/210, such as described in greater detail elsewhere herein.

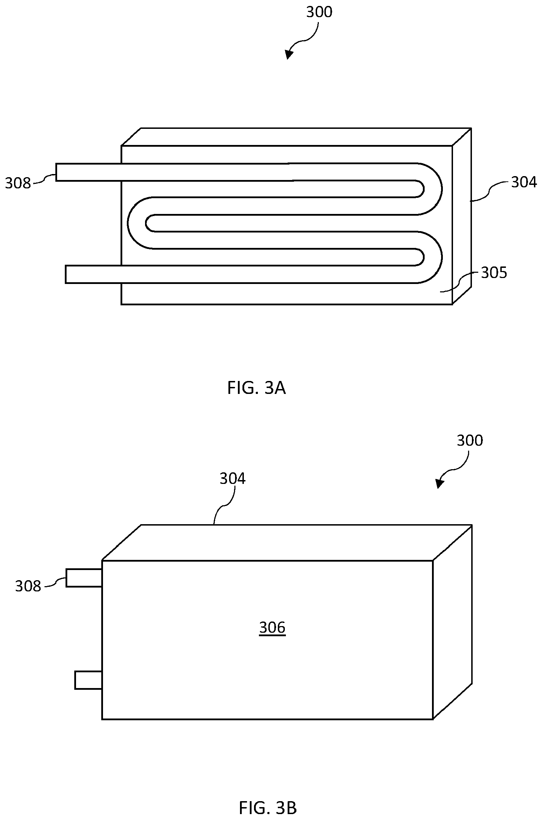

Reference is now made to Figure 3A and Figure 3B, which show a cross section and isometric view of a radiating storage (e.g., the radiating storages 110 and 120), respectively.

The radiating storage 300 (e.g., the radiating storages 110 and 120) may be disposed around at least a portion of the one or more pipes 308 (e.g., the pipes 108a/108b/208a/208b/208c/208d), such that the refrigerant flowing through the pipes 308 is in direct contact with the materials of the radiating storage 300. The radiating storage 300 may be in contact with at least a portion of the 308, such that the refrigerant inside the pipe 308 is in thermal communication with the radiating storage 300. The radiating storage 300 may be contained in an area surrounding at least a portion of the pipe 308 such that heat is efficiently transferred between the refrigerant in the pipe 308 and the material of the radiating storage 300. The radiating storage 300 may include a material configured to contact and/or surround at least a portion of the 308 (e.g., the pipes 108a/108b/208a/208b/208c/208d).

The radiating storage 300 (e.g., the radiating storages 110 and 120) may be configured to absorb heat from the refrigerant in the pipe 308 and emit the heat. The radiating storage 300 may comprise a material configured to absorb and release energy efficiently. The radiating storage 300 may include a phase change material (PCM). The PCM may be organic and/or inorganic. For example, the PCM may include paraffin wax, salts, Sulphur, potassium, red phosphorus, water, or similar materials. The PCM may be configured to release and/or absorb energy at phase transition. The phase transition may be from one of the states of the PCM, such as solid or liquid, to the another (e.g., solid to liquid, liquid to solid, liquid to gas, gas to liquid, solid to gas, gas to liquid). The phase transition may be between non-classical states of the PCM, such as the conformity of crystals, where the PCM goes from conforming from one crystalline structure to another and the two crystalline structures may have different energy states.

The phase change temperature, or the temperature at which the phase of the PCM changes from a first phase to a second phase, may range between -5 and 100 degrees Celsius. The phase change temperature may be a melting temperature. The phase change temperature may be chosen for a specific radiating storage (e.g., the radiating storages 110/210/300) based on the type of use of the indoor unit. The use of the indoor unit 104/204 may include the type of room that would be heated and/or cooled, such as, for example, the size of the room, the insulation the room has, the number of people that will be in the room, the usage of the room itself (for example, if the room is a kitchen, a bedroom, a server room, a storage room, etc.), and the like. The use of the indoor unit 104/204 may include the weather conditions outside of the room and/or building in which the room is in. The use of the indoor unit 104/204 may include the season, time of year, the time during the day, and the like.

For example, a PCM configured to be used for heating a room may a melting temperature within the range of 35 to 80 degrees Celsius. The PCM may have a melting temperature within the range of 45 to 75 degrees Celsius. The PCM may have a melting temperature within the range of 50 to 70 degrees Celsius. The PCM may have a melting temperature within the range of 35 to 60 degrees Celsius. The PCM may have a melting temperature within the range of 35 to 50 degrees Celsius. The PCM may have a melting temperature within the range of 55 to 60 degrees Celsius.

For example, a PCM configured to be used for heating a room may a melting temperature within the range of -5 to 15 degrees Celsius. The PCM may have a melting temperature within the range of -2 to 9 degrees Celsius. The PCM may have a melting temperature within the range of -2 to 7 degrees Celsius. The PCM may have a melting temperature within the range of -5 to 10 degrees Celsius. The PCM may have a melting temperature within the range of -5 to 5 degrees Celsius.

The radiating storage 300 (e.g., the radiating storages 110 and 120) may include a combination of phase changing materials. The radiating storage 300 may include one or more thermal composites, or in other words, one or more combinations of PCMs with other materials (such as, e.g., metals). The other materials in the thermal composites may include solids and/or liquids. The radiating storage 300 may include one or more micro-encapsulated PCMs. The radiating storage 300 may include a combination of different PCMs having different phase change temperatures, wherein the different PCMs are separately encapsulated. The radiating storage 300 may be modular by having a plurality of compartments, wherein each of the plurality of compartments may be configured to contain a separate phase change material, thus creating a combination of materials in the radiating storage 300.

The combination of materials (e.g., combination of phase changing materials) may include ratios of different materials and/or phase changing materials. The ratios and/or amounts of the materials may be calculated based on the use of the indoor unit 104/204. The ratios and/or amounts of the materials may be calculated in order to set the melting temperature (or phase change temperature) to a desired temperature. The desired temperature may be the overall (or average) phase change temperature of the radiating storage (e.g., the thermal storage buffer 110/210/300). The desired temperature (or custom temperature) may be set based on the climate, the weather, the season, the time of year, the personal preferences of one or more users (or residents of the room or building), the size of the room, the location of the indoor unit 104/204 within the room, and the like.

The PCM may be an adaptable PCM comprising an adaptable phase change temperature. The adaptable melting temperature may be set using a combination of PCMs having a phase change temperature associated with a heating cycle and another phase change temperature associated with a cooling cycle. The adaptable phase change temperature may result by combining two or more PCMs, and the difference between two or more of the phase change temperatures may range between 10 and 30 degrees, between 5 and 40 degrees, between 20 and 50 degrees, between 40 and 60 degrees, etc.

The radiating storage 300 (e.g., the radiating storages 110/210) may be a plate, one or more fins and/or a cylinder. The radiating storage 300 may be shaped such that at least one portion 306 of the surface 304 of the radiating storage 300 is abutting at least a portion of the one or more walls of the housing 104/114. The radiating storage 300 may be shaped such that at least one portion 306 of the surface 304 of the radiating storage 300 is flush with at least a portion of the one or more walls of the housing 104/114, or in other words, a portion of the one or more walls of the housing 104/114 may be at least one portion of (e.g., flush with) 306 of the surface 304 of the radiating storage 300. The at least one portion 306 may include any one or more of an arc shape, a plate (or flat shape), one or more fins, and the like.

The surface 304 of the radiating storage 300 may include one or more walls. The surface 304 may be defined by one or more containers and/or recesses of the housing 114/214. The surface 304 may include one or more walls or plates configured to contain a PCM, a combination of PCMs, and/or a combination of one or more PCMs with other materials (e.g., metals). The surface 304 of the radiating storage 300 may include at least one emitting portion, such as portion 306, configured to transfer heat efficiently towards the room. The emitting portion may be thermally conductive. The surface 304 of the radiating storage 300 may include at least one storage portion, for example, the rest of the surface 304 (for example, the portions which do not include the portion 306) thereby directing the emitted heat only through an emitting portion of the surface 304. The storage portion of the radiating storage may be less thermally conductive than the emitting portion. The storage portion of the radiating storage may be configured to storage energy therein. The storage portion of the radiating storage may be configured to prevent heat from radiating therefrom.

Referring back to Figure 2, the indoor unit 204 may include an indoor heat exchanger 238. The indoor heat exchanger 238 may include a secondary radiating storage surround a second portion of the pipe 208d. The indoor heat exchanger 238 may include one or more fans 236a/236b configured to direct an air flow through the indoor heat exchanger 238 and into the room surrounding the indoor unit 204. The one or more fans 236a/236b may be positioned in a vicinity of the secondary radiating storage. The one or more fans 326a/326b may be positioned near the secondary radiating storage such that the one or more fans 236a/236b direct heat from the secondary radiating storage toward the one or more vents (such as depicted by arrows 250 and 252). The one or more fans 326a/326b may be positioned near the secondary radiating storage such that the one or more fans 236a/236b direct heat from vents towards the secondary radiating storage. The one or more fans 236a/236b may be operated and/or controlled by the controller 240. The secondary radiating storage may have the same or similar characteristics as the radiating storage 110/210/300.

The second portion of the pipe 208d may be coupled to a three-way valve 216. The three-way valve 216 may be configured to control the refrigerant flow between the radiating storage 210 and the heat exchanger 238. The three-way valve 216 may be configured to combine two refrigerant streams into one (for example, in a cooling cycle of the heat pump 202), and/or to split a single refrigerant stream into two (for example, in a heating cycle of the heat pump 202). The three-way valve 216 may be connected to the outdoor unit 206 at a first end. The three-way valve 216 may be coupled to the radiating storage 210 at a second end. The three-way valve 216 may be coupled to the indoor heat exchanger 238 at a third end. The three-way valve 216 may include any one or more of an actuated ball valve, a stepper driven 3-way valve, a modulating three-way valve, or any combination thereof.

The actuated ball valve may include a ball valve with an electric actuator. The actuated ball valve may be configured to select the ratio of diversion of the two streams of refrigerant (for example, the ratio may be split between 0-100%, one side receives X and the other side 100%-X), wherein the two streams may be the streams coming out of (or going into) the second end and the third end of the three-way valve 216. The stepper driven three-way valve may include an actuator or a stepper motor. The modulating three-way valve may be configured to modulate the flow of refrigerant between two outlets (e.g., such as the second end and the third end of the three-way valve 216).

The three-way valve 216 may be operated and/or controlled by the controller 240. The three-way valve 216 may be operated to control the rate of flow of refrigerant in the pipe 208d, thereby enabling control of the amount of heat exchanged (e.g., from and/or to the room and to and/or from the refrigerant in the pipe 208d) using the indoor heat exchanger 238. The controller 240 may be configured to operate the three-way valve 216 in order to obtain a specific ratio between the amount of heat transferred (into and/or out of the room) using the thermal buff storage 210 and the amount of heat transferred (into and/or out of the room) using the indoor heat exchanger 238. Thus, the three-way valve 216 may be operative to control the amount of refrigerant which flows into the radiating storage 210 via the pipe 208c or to the indoor heat exchanger 238 via the pipe 208d.

Since the indoor heat exchanger 238 may use convection as the form of heat transfer into/out of the room, and the radiating storage 210 uses radiation as the form for heat transfer into/out of the room, thus, the three-way valve 216 may be used to define (or determine) the ratio of radiation to convection of the indoor unit 204 and/or the heat pump 204. The three-way valve 216 may be configured to stop convection heat transfer from and/or to the indoor unit 204, for example, such as during a defrost cycle of the heat pump system 200. The three-way valve 216 may be operated to charge and discharge the radiating storage 210 according to an operation state of the heat pump system 200. The operation state may include a heating state, which may be associated with the heating cycle of the heat pump system 202. The operation state may include a cooling state, which may be associated with the cooling cycle of the heat pump system 202.

The controller 240 may be configured to operate the three-way valve 216 such that 0% to 50% of the heat flow into and/or out of the room is provided by the radiating storage 210. The controller 240 may be configured to operate the three-way valve 216 such that 5% to 25% of the heat flow into and/or out of the room is provided by the radiating storage 210. The controller 240 may be configured to operate the three-way valve 216 such that 10% to 50% of the heat flow into and/or out of the room is provided by the radiating storage 210. The controller 240 may be configured to operate the three-way valve 216 such that 50% to 75% of the heat flow into and/or out of the room is provided by the radiating storage 210. The controller 240 may be configured to operate the three-way valve 216 such that 65% to 100% of the heat flow into and/or out of the room is provided by the radiating storage 210. The controller 240 may be configured to operate the three-way valve 216 such that 85% to 95% of the heat flow into and/or out of the room is provided by the radiating storage 210.

The controller 240 may be configured to operate the three-way valve 216 such that an energy in an hour that the radiating storage 210 emits is between 5% and 25% of an energy rating of the heat pump system 200. The controller 240 may be configured to operate the three-way valve 216 such that an energy in an hour that the radiating storage 210 emits is between 10% and 50% of an energy rating of the heat pump system 200. The controller 240 may be configured to operate the three-way valve 216 such that an energy in an hour that the radiating storage 210 emits is between 50% to 75% of an energy rating of the heat pump system 200. The controller 240 may be configured to operate the three-way valve 216 such that an energy in an hour that the radiating storage 210 emits is between 65% to 100% of an energy rating of the heat pump system 200. The controller 240 may be configured to operate the three-way valve 216 such that an energy in an hour that the radiating storage 210 emits is between 85% to 95% of an energy rating of the heat pump system 200.

Referring back to both Figures 1 and 2, the heat pump system 100/200 may include one or more pipes (e.g., pipes 108a/108b/208a/208b/208c/208d) configured to provide fluid from the indoor unit 104/204 to the outer unit 106/206 and vice versa. The one or more pipes may be in contact with the radiating storage 110/210. Thus, heat can be transferred between the temperature-controlled area and the outdoor unit 106/206 by emission or absorption of heat from the radiating storage 110/210. The heat pump system 100/200 may include a controller 140/240 configured to operate or control the operation of the heat pump system 100/200. The indoor unit 104/204 may be coupled to the outdoor unit 106/206 via the one or more pipes 108/208 and/or the purge interface units 112a/112b/212a/212b. The one or more pipes may include one or more valves, such as, but no limited to, the three-way valve 216.

The indoor unit 104/204 may be configured to receive a flow of refrigerant from the outdoor unit 106/206 via one or more pipes (e.g., pipes 108a/108b/208a/208b/208c/208d) configured. For example, for the heat pump system 100 in Figure 1, a first pipe portion 108a may carry refrigerant from the outdoor unit 106 to the indoor unit 104 and a second pipe portion 108b may carry refrigerant from the indoor unit 104 to the outdoor unit 106. The first pipe portion 108a and the second pipe portion 108b may be integral to a single pipe or to a collection of consecutive pipes. The first pipe portion 108a may include any one or more pipes extending from the outdoor unit 106 to a heat transferring device within the indoor unit 104, such as, for example, the radiating storage 110. The second pipe portion 108b may include any one or more pipes extending from the heat transferring device within the indoor unit 104 to the outdoor unit 106.

For the heat pump system 200 in Figure 2, the pipes 208a and 208b may be similar to the pipes 108a and 108b, respectively. Additionally, the indoor unit 204 may include a third pipe portion 208c and a fourth pipe portion 208d. The third pipe portion 208c and the fourth pipe portion 208d may be coupled, within the indoor unit 204, to the three-way valve 216.

The one or more pipes 108a/108b/208a/208b (collectively referred to herein as pipes 108/208) may be coupled to the indoor unit 104/204 and/or the outdoor unit 106/206 via one or more purge interface units 112a/112b/112c/112d/212a/212b/ 212c/212d (collectively referred to herein as purge interface units 112/212). The one or more pipes 108/208 may be coupled to the indoor unit 104/204 via one or more purge interface units 112a/112b/212a/212b and to the outdoor unit 106/206 via the one or more purge interface units 112c/112d/212c/212d. The one or more purge interface units 112/212 may include a mini purge interface unit (MILT) and/or a smart purge interface unit (SILT). For example, the one or more pipes 108/208 may include the purge interface units 112a/112b/212a/212b at the interface of the pipe 108/208 and the housing 114/214 of the indoor unit 104/204.

The one or more pipes 108a/108b/208a/208b/208c/208d may extend within the indoor unit 104/204. The one or more pipes 108/208 may extend from a first purge interface unit 112a/212a to the radiating storage 110/210. The one or more pipes may extend from the radiating storage 110/210 to a second purge interface unit 112b/212b. The one or more pipes 208 may split between the first purge interface unit 212b and the radiating storage 210/, for example, via a three-way valve 216, such as depicted in Figure 2. The one or more pipes 108a/108b/208a/208b/208c/208d may direct the refrigerant from the first purge interface unit 112a/212a and the second purge interface unit 112b/212b to one or more heat transferring devices. The refrigerant may be a fluid configured to flow within the one or more pipes 108a/108b/208a/208b/208c/208d during any one or more of the cooling cycle (or refrigeration cycle), heating cycle, and/or the defrost cycle. The refrigerant may be configured to undergo a repeated phase transition from a liquid to a gas and vice versa.

At least a portion of the one or more pipes 108a/208a may extend between the first purge interface unit 112a/212a and a third purge interface unit 112c/212c. The third purge interface unit 112c/212c may connect between the pipes 108a/208a outside of the outdoor unit 106/206 to the pipes 108a/208a within the outdoor unit 106/206. At least a portion of the pipes 108b/208b may extend between the second purge interface unit 112b/212b and a fourth purge interface unit 112d/212d. The fourth purge interface unit 112d/212d may connect between the pipes 108b/208b outside of the outdoor unit 106/206 to the one or more pipes 108b/208b within the outdoor unit 106/206.

The indoor unit 104/204 may be disposed inside a building and/or room. The outdoor 106/206 unit may be disposed outside the building and/or room. The outdoor unit 106/206 may be disposed outdoors, such as, for example, around the exterior of a building in which the indoor unit 104/204 is placed. The indoor unit 104/204 and the outdoor unit 106/206 may be adjacently disposed. The heat pump system 100/200 may be positioned on a wall of a room such that the indoor unit 104/204 extends towards the interior of the room and the outer unit 106/206 extends outside of the room. One or more portions of the heat pump system 100/200 may be disposed in an opening of a wall of the room (such as an exterior wall separating between the indoors and the outdoors). One or more portions of the heat pump system 100/200 may be disposed on a window in the wall of the room. For example, the one or more portions of the heat pump system 100/200 may include at least a portion of any one or more of the indoor unit 104/204, the outdoor unit 106/206, and the one or more pipes 108a/108b/208a/208b/208c/208d.

The outdoor unit 106/206 may include a reversing valve 126/226. The reversing valve 126/226 may be coupled to the third purge interface unit 112c/212c. The reversing valve 126/226 may be in fluid communication with the one or more pipes 108a/208a via the third purge interface unit 112c/212c. Additionally, the reversing valve 126/226 may be in fluid communication with the one or more pipes 108b/208b via the fourth purge interface unit 112d/212d. The reversing valve 126/226 may be configured to change the direction of the flow of the refrigerant within the one or more pipes 108a/108b/208a/208b. The reversing valve 126/226 may be in communication with the controller 140/240.

The outdoor unit 106/206 may include an outdoor heat exchanger 124/224. The outdoor heat exchanger 124/224 may include one or more coils. The outdoor heat exchanger 124/224 may be in fluid communication with the pipes 108a/108b/208a/208b. The outdoor heat exchanger 124/224 may be coupled to the reversing valve via the pipes 108b/208b. The outdoor heat exchanger 124/224 may be configured to transfer heat from air outside of the outdoor unit 106/206 to the refrigerant in the pipes 108b/208b. The outdoor heat exchanger 124/224 may be configured to transfer heat from the refrigerant in the pipes 108b/208b to the air outside of the outdoor unit 106/206.

The outdoor unit 106/206 and/or the outdoor heat exchanger 124/224 may include one or more fans 122/222. The one or more fans 122/222 may be positioned near the outdoor heat exchanger 124/224. The one or more fans 122/222 may be positioned near the one or more coils of the outdoor heat exchanger 124/224. The one or more fans 122/222 may be configured facilitate the heat exchange and to direct air. The one or more fans 122/222 may be configured to direct air from and/or to the outdoor heat exchanger 124/224. The one or more fans 122/222 may be configured to direct air from and/or to the one or more coils of the outdoor heat exchanger. The one or more fans 122/222 may be configured to direct air from and/or to the air outside of the outdoor unit 106/206. The one or more fans 122/222 may be in communication with the controller 140/240, such that the controller 140/240 may control the operation of the one or more fans 122/222. The outdoor heat exchanger 124/224 may be coupled to the fourth purge interface unit 112d/212d via the one or more pipes 108b/208b.

The outdoor unit 106/206 may include a compressor 132/232. The compressor 132/232 may be in fluid communication with the pipes 108a/108b/208a/208b. The compressor 132/232 may be configured to compress the refrigerant, thereby raising the temperature and/or pressure of the refrigerant. The compressor 132/232 may be in communication with the controller 140/240. The compressor 132/232 may be coupled to an inverter 128/228. The inverter 128/228 may be in fluid communication with the one or more pipes 108a/108b/208a/208b. The inverter 128/228 may be in communication with the controller 140/240.

The outdoor unit 106/206 may include a condenser 130/230. The condenser 130/230 may include an air-cooled condenser (ACC). The condenser 130/230 may be in fluid communication with the pipes 108a/108b/208a/208b. The condenser 130/230 may be coupled to at least one of the compressor 132/232 and the reversing valve 126/226, for example, via the pipes 108a/108b/208a/208b. The condenser 130/230 may be disposed between the compressor 132/232 and reversing valve 126/226. The condenser 130/230 may be in communication with the controller 140/240.

The outdoor unit 106/206 may include an expansion valve 134/234. The expansion valve 134/234 may be in fluid communication with the one or more pipes 108b/208b. The expansion valve 134/234 may be coupled to the outdoor heat exchanger 124/224 via the pipes 108b/208b. The expansion valve 134/234 may be configured to remove pressure from the refrigerant, thereby enabling expansion thereof and/or a change of state (of the refrigerant) from a liquid to a vapor in the evaporator. The expansion valve 134/234 may be in communication with the controller 140/240. The expansion value 134/234 may be disposed between the outdoor heat exchanger 124/224 and the fourth purge interface unit 112d/212d.

The heat pump system 100/200, and/or any portions thereof may be in communication with the controller 140/240, such as described in greater detail elsewhere herein. The controller 140/240 may be configured to operate the heat pump system 100/200 and/or any portions thereof, such as, for example, but not limited to, the three-way valve 216, the purge interface units 112a/112b/112c/112d/212a/212b/212c/212d, the compressor 132/232, the inverter 128/228, the reversing valve 126/226, the expansion valve 134/234, the indoor heat exchanger 238, and/or the outdoor heat exchanger 124/224. The controller 140/240 may be a local controller or a remote controller. The controller 140/240 may be disposed within the indoor unit 104/204 and/or within the outdoor unit 106/206. The controller 140/240 may be in communication with a memory module. The controller 140/240 may be configured to receive data from the memory module and/or send data to the memory module.

The controller 140/240 may be configured to switch the heat pump system 100/200 from a heating mode to a cooling mode of the heat pump system 100/200. The controller 140/240 may be configured to switch the heat pump system 100/200 from a cooling mode to a heating mode of the heat pump system 100/200. The controller 140/240 may be configured to switch the heat pump system 100/200 from a heating mode to a defrost mode of the heat pump system 100/200, or vice versa.

The controller may be in communication with a user interface. The user interface may include any one or more of a remote, a button, a keyboard, a display screen, a smart phone, a tablet, a laptop/computer, or other appropriate device, which a resident of the room may carry with himself or herself. The controller 140/240 may be in communication with an application on the user interface. The controller 140/240 may be used from within the room or from outside the room. Communications from or to the controller 140/240 may be encrypted (e.g., for example, using keys generated and shared, or using an encryption method).

The controller 140/240 may include a communication module and/or a wireless interface configured to communicate with the user interface. The wireless interface may be part of the controller 140/240. The wireless interface may include at least one of a sim card or internet card. The communication module may include wired or wireless communication protocols, such as, for example, any one or more protocols of power line communication, Ethernet, Bluetooth^{™}, Wi-Fi, ZigBee^{™}, wireless network, and the like, or any combination thereof.

The user (or occupant) of a room or a building may be associated with at least one personal device (which may also function as the user interface, such as a remote controller or a local controller, for example, a smartphone, smartwatch, computer, or tablet) that may be carried by the user. The personal device may function as a beacon, signaling the presence of the user in the room. If the beacon signal is detected on a local area network (LAN), the user associated with that particular beacon may be considered as 'present'. If the beacon signal is detected on a different segment of a wide area network (WAN) than a local LAN, then the user associated with that particular beacon may be considered as 'remote'.

Similarly, if the beacon is not detected, the user associated with the personal device may be considered by the controller 140/240 as using a remote controller. If the controller 140/240 detects the beacon, the user associated with the at least one personal device may be considered by the controller 140/240 as using a local controller. In a home environment, the whole home may have one LAN, and if the particular user's device is connected directly to the LAN, then the associated particular user may be considered to be within the local domain of the controller 140/240.

The controller 140/240 may be configured to receive instructions from the user interface. The instructions may include a temperature setting, a time setting, and the like. The controller 140/240 may be configured to set the temperature without user inputted data. The controller 140/240 may be configured to set the temperature of the radiating storage 110/210/300 based on any one or more of the climate, the weather, the season, the time of year, the personal preferences of one or more users (or residents of the room), the size of the room, the location of the indoor unit 104/204 within the room, the time during the day, data of past days (or weeks and/or months) stored in the memory module, and the like. the controller 140/240 may calculate the required temperature setting needed of the radiating storage 110/210/300 in order to reach a certain (or desired) room temperature.

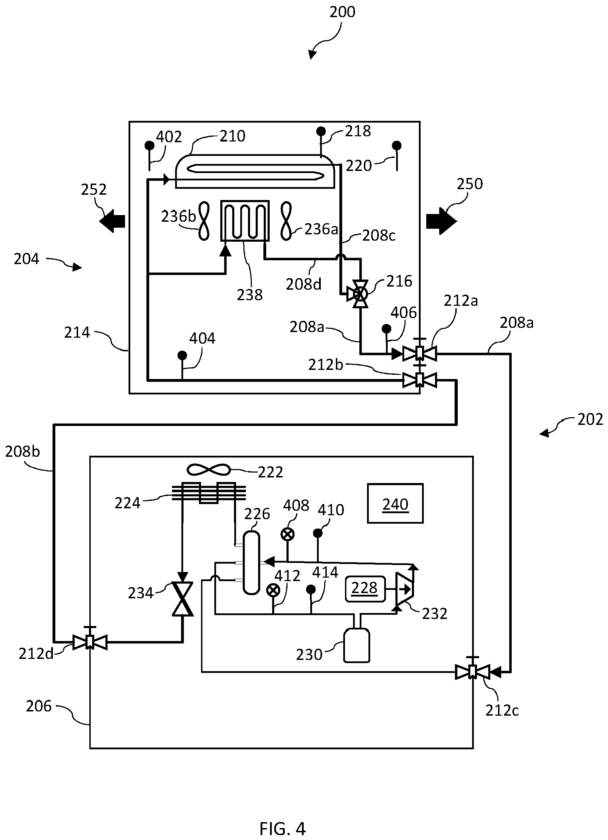

The heat pump system 100/200 may include one or more temperature sensors in communication with the controller 140/240. The heat pump system 100/200 may include one or more temperature sensors 120/220 disposed within the indoor unit 104/204. The heat pump system 100/200 may include one or more temperature sensors configured to be located at one or more locations within the room. The heat pump system 100/200 may include one or more temperature sensors configured to be outdoors. The heat pump system may include one or more temperature sensors (e.g., sensors 410/414 in Figure 4) disposed within the outdoor unit 106/206 and/or in communication with the controller 140/240. The system 100/200 may include one or more pressure sensors (e.g., sensors 408/412 in Figure 4) in communication with the controller 140/240. The system may include one or more pressure sensors (e.g., sensors 408/412 in Figure 4) disposed within the outdoor unit 106/206.

The controller 140/240 may be configured to receive data from any one or more of the temperature sensors (e.g., sensors 410/414 in Figure 4) and/or the pressure sensors (e.g., sensors 408/412 in Figure 4). The controller 140/240 may be configured to monitor the temperatures and/or pressures measured by the one or more temperature sensors and/or pressure sensors. The controller 140/240 may be configured to operate the heat pump system 100/200 based on data received from the one or more temperature sensors and/or pressure sensors. The controller 140/240 may be configured to set an operational state of the heat pump system 100/200 based on data received from the one or more temperature sensors and/or pressure sensors.

The controller 140/240 may be configured to set a temperature of the radiating storage 110/210 based on data received from the one or more temperature sensors and/or pressure sensors. The controller 140/240 may be configured to set an operational mode (such as, for example, a heating mode, cooling mode, and/or defrost mode) of the heat pump system 100/200 based on data received from the one or more temperature sensors and/or pressure sensors. The controller 140/240 may be configured to switch between operational modes of the heat pump system 100/200 based on data received from the one or more temperature sensors and/or pressure sensors.

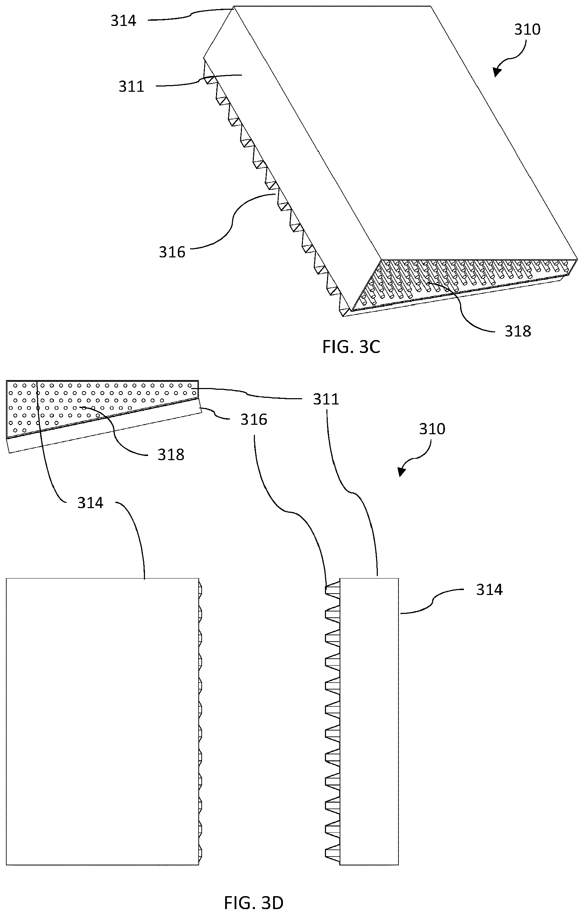

Reference is now made to Figure 3C and Figure 3D, which show isometric and orthogonal views of a second radiating storage 310, respectively. The second example radiating storage 310 comprises a body 311, where the body 311 may contain a PCM within and include a radiating surface 314. The second example radiating storage 310 may comprise heat fins 316 and/or heat pipes 318.

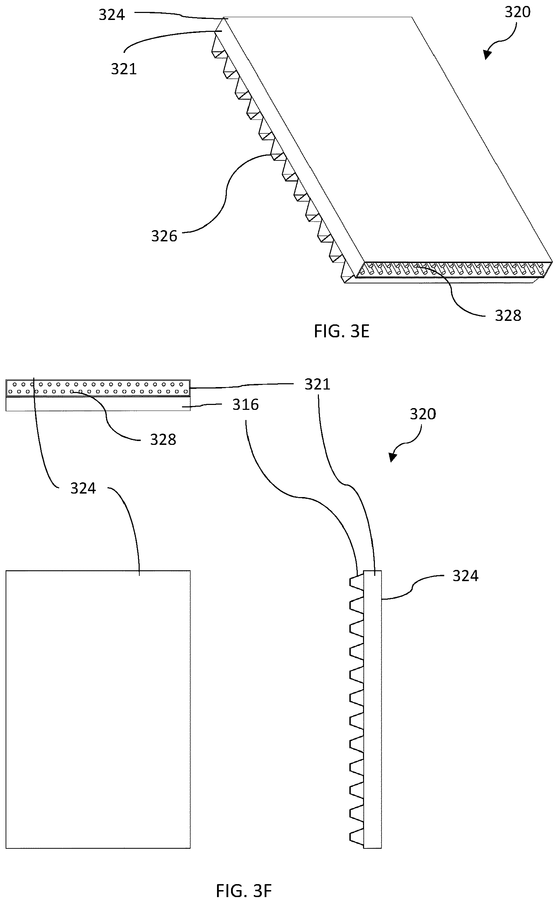

Reference is now made to Figure 3E and Figure 3F, which show isometric and orthogonal views of a third radiating storage 320, respectively. The third example radiating storage 320 comprises a body 321, where the body 321 may contain a PCM within the body and include a radiating surface 324. The third example radiating storage 320 may comprise heat fins 326 and/or heat pipes 328.

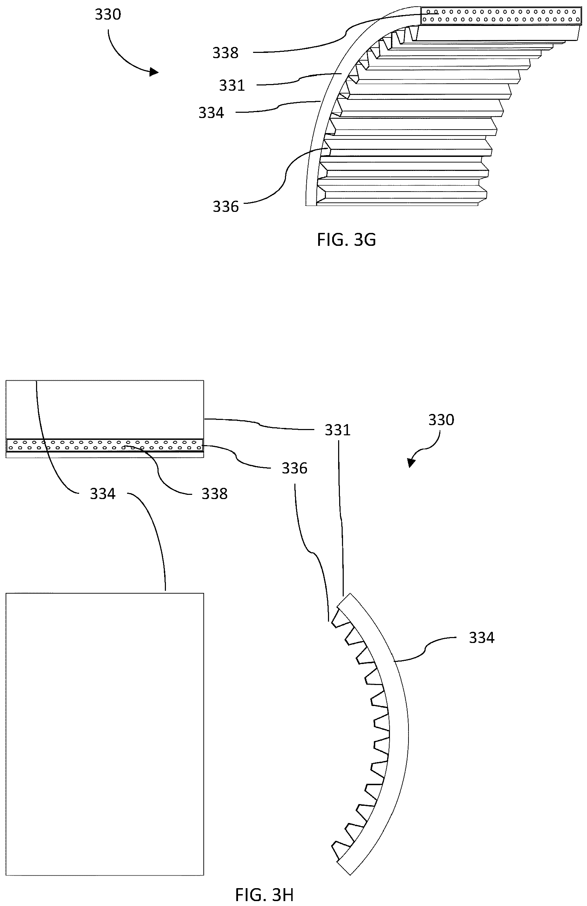

Reference is now made to Figure 3G and Figure 3H, which show isometric and orthogonal views of a fourth radiating storage 330, respectively. The fourth example radiating storage 330 comprises a body 331, where the body 331 may contain a PCM within the body and include a radiating surface 324. The fourth example radiating storage 330 may comprise heat fins 336 and/or heat pipes 338.

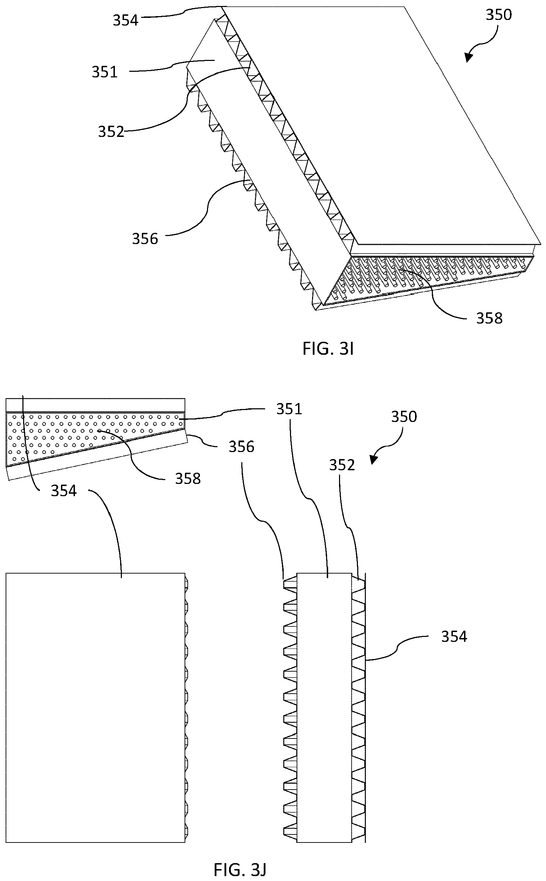

Reference is now made to Figure 3I and Figure 3J, which show isometric and orthogonal views of a fifth radiating storage 350, respectively. The fifth example radiating storage 350 comprises a body 351, where the body 351 may contain a PCM within the body and include a radiating surface 354. The fifth example radiating storage 350 may comprise heat fins 352 and 356 and/or heat pipes 358.

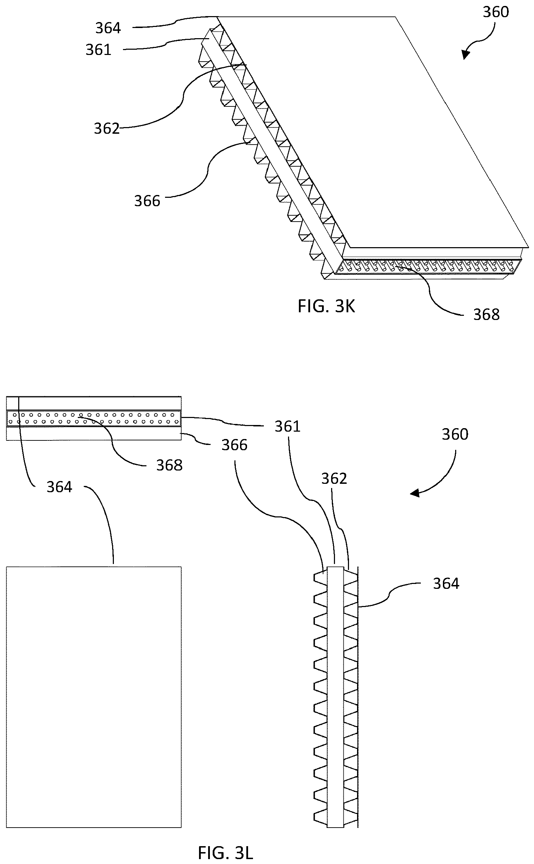

Reference is now made to Figure 3K and Figure 3L, which show isometric and orthogonal views of a sixth radiating storage 360, respectively. The sixth example radiating storage 360 comprises a body 361, where the body 361 may contain a PCM within the body and include a radiating surface 364. The sixth example radiating storage 360 may comprise heat fins 362 and 366 and/or heat pipes 368.

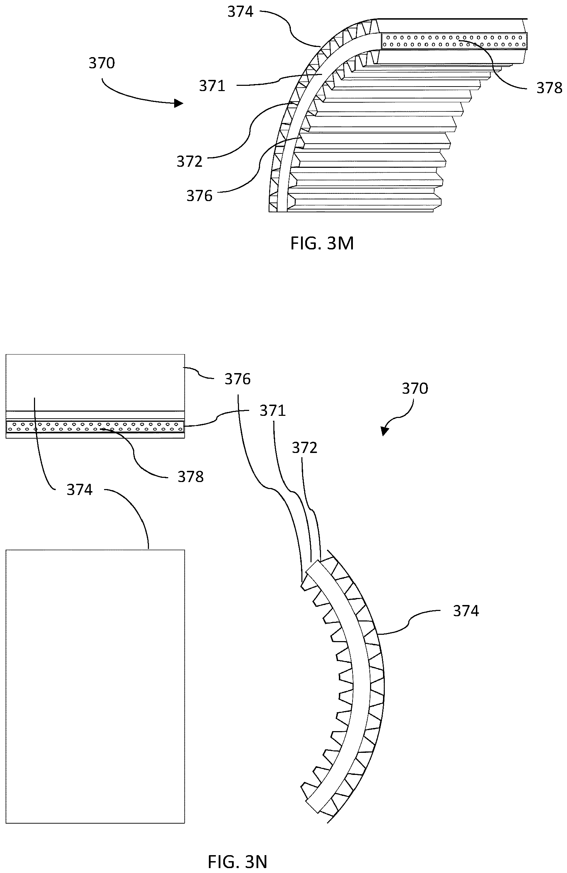

Reference is now made to Figure 3M and Figure 3N, which show isometric and orthogonal views of a seventh radiating storage 370, respectively. The seventh example radiating storage 370 comprises a body 371, where the body 371 may contain a PCM within the body and include a radiating surface 374. The seventh example radiating storage 370 may comprise heat fins 372 and 376 and/or heat pipes 378.

Reference is now made to Figure 4, which shows a schematic illustration of a heat pump system 200 during a cooling cycle. The cooling cycle as depicted in Figure 4 may be performed with or without the usage of the secondary radiating storage 238. During the cooling cycle, the heat pump system 200 may operate such that the heat is transferred from the room and to the refrigerant in the pipes 208a/208b via the indoor unit 204. While the cooling cycle is described based on the heat pump system 200, the heat pump system 100 of Figure 1 may undergo a similar cooling cycle.

The cooling cycle may be used when a room or building housing the indoor unit 204 needs cooling, or in other words, when the temperature outside may be hotter than a comfortable temperature for human residence. The cooling cycle as described herein may be started by the controller 240. The controller may start the cooling cycle when a temperature outdoors is above a threshold temperature.

During the cooling cycle, the refrigerant may exit the outdoor unit 206 via the fourth purge interface unit 212d. The refrigerant may travel via the pipe 208b from the fourth purge interface unit 212d to the indoor unit 204 and/or the second purge interface unit 212b. The refrigerant may flow from the second purge interface unit 212b to the radiating storage 210. The refrigerant may flow from the second purge interface unit 212b to the indoor heat exchanger 238. The refrigerant may flow from the second purge interface unit 212b to both of the radiating storage 210 and the indoor heat exchanger 238. The refrigerant may flow from the second purge interface unit 212b to both of the radiating storage 210 and the indoor heat exchanger 238 via a three-way valve.

Once the refrigerant reaches the radiating storage 210, the refrigerant may flow within the radiating storage 210 to absorb the heat from the radiating storage 210/300. The refrigerant may then flow out of the radiating storage 210. Thus, the temperature of the refrigerant flowing out of the radiating storage 210 is higher than the temperature flowing into the radiating storage 210. The radiating storage 210 may continuously receive heat from the room via radiation, convection, or conduction. The radiating storage 210 may continuously transfer the heat from the room into the refrigerant flowing through the radiating storage 210.

Once the refrigerant reaches the indoor heat exchanger 238, the refrigerant may flow within the thermal indoor heat exchanger 238 thereby receiving heat from indoor heat exchanger 238 and then flowing out of the indoor heat exchanger 238. Thus, the temperature of the refrigerant flowing out of the indoor heat exchanger 238 may be higher than the temperature flowing into the indoor heat exchanger 238. The indoor heat exchanger 238 may continuously receive heat from the room via convection. The indoor heat exchanger 238 may continuously transfer the heat from the room into the refrigerant flowing through the indoor heat exchanger 238.

After exiting the radiating storage 210 and/or the indoor heat exchanger 238, the heated refrigerant may flow to the outdoor unit 206. For a system including two or more streams of refrigerant, such as system 200 depicted in Figure 4, the two or more streams of refrigerant may be converged into a single stream of refrigerant using a valve, such as the three-way valve 216. The refrigerant may then flow from the three-way valve 316 towards the first purge interface unit 212a via the pipe 208a. The refrigerant may then flow from the first purge interface unit 212a and/or from the indoor unit 204 to the outdoor unit 206. In the outdoor unit 206, the heat may be released from the refrigerant, such that the refrigerant is cooled. Once the refrigerant is cooled it may flow back into the indoor unit 204 as described herein.

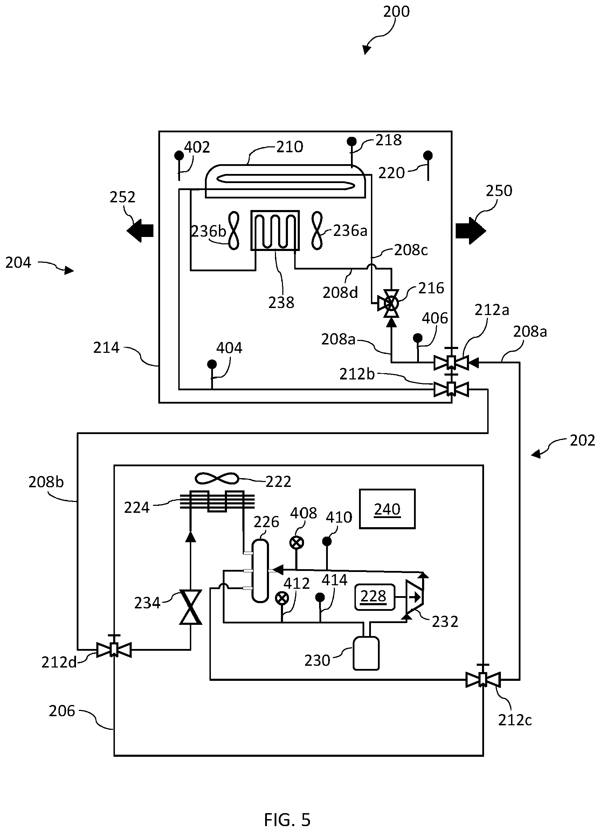

Reference is now made to Figure 5, which shows a schematic illustration of a heat pump system 200 during a heating cycle. The heating cycle as depicted in Figure 5 may operate with or without the secondary radiating storage 238. During the heating cycle, the system 200 may operate such that the heat is transferred from the refrigerant and to the room via the indoor unit 204. While the heating cycle is described based on the heat pump system 200, the heat pump system 100 of Figure 1 may undergo a similar heating cycle.

The heating cycle may be used when a room or a building needs heating, or in other words, when the temperature outside may be colder than a comfortable temperature for human residence. The heating cycle as described herein may be started by the controller 240. The controller may start the heating cycle when a temperature outdoors is below a threshold temperature.

During the heating cycle, a heated refrigerant may exit the outdoor unit 206 via the third purge interface unit 212c. The refrigerant may travel via the pipe 208a from the third purge interface unit 212c to the indoor unit 204 and/or the first purge interface unit 212a. The refrigerant may flow from the first purge interface unit 212a to the radiating storage 210. The refrigerant may flow from the first purge interface unit 212a to the indoor heat exchanger 238. The refrigerant may flow from the first purge interface unit 212a to both of the radiating storage 210 and the indoor heat exchanger 238. The refrigerant may flow from the first purge interface unit 212a to both of the radiating storage 210 and the indoor heat exchanger 238 via the three-way valve 216. The controller 240 may determine how much refrigerant flows to each of the radiating storage 210 and the indoor heat exchanger 238 by controlling the three-way valve 216. The controller may determine the ratio of refrigerant flow in the radiating storage 210 to the refrigerant flow in the indoor heat exchanger 238, by controlling the three-way valve 216.

Once the refrigerant reaches the radiating storage 210, the refrigerant may flow within the radiating storage 110/210/300 thereby releasing heat from the radiating storage 210. The refrigerant may then flow out of the radiating storage 210. Thus, the temperature of the refrigerant flowing into the radiating storage 210 is higher than the temperature flowing out of the radiating storage 210. The radiating storage 210 may continuously release heat into the room via radiation, convection, and/or conduction. The radiating storage 210 may continuously transfer the heat from the refrigerant to the room.

Once the refrigerant reaches the indoor heat exchanger 238, the refrigerant may flow within the thermal indoor heat exchanger 238 and release heat air from indoor heat exchanger 238 towards the one or more fans 236a/236b. The one or more fans 236a/236b may direct the heated air surrounding the heat exchanger 238 out of one or more vents and into a room housing the indoor unit 204. Thus, the temperature of the refrigerant flowing into of the indoor heat exchanger 238 may be higher than the temperature flowing out of the indoor heat exchanger 238. The indoor heat exchanger 238 may continuously release heat to the room via convection. The indoor heat exchanger 238 may continuously release the heat from the refrigerant flowing through the indoor heat exchanger 238 towards the room via convection.

After exiting the radiating storage 210 and/or the indoor heat exchanger 238, the refrigerant may be cooler. The refrigerant may then flow to the outdoor unit 206. For a system including two or more streams of refrigerant, such as heat pump system 200 depicted in Figure 5, the two or more streams of refrigerant may be converged into a single stream of refrigerant using a valve, such as a three-way valve. The refrigerant may then flow from the valve towards the second purge interface unit 212b via the pipe 208b. The refrigerant may then flow from the second purge interface unit 212b and/or from the indoor unit 204 to the outdoor unit 206. In the outdoor unit 206, the refrigerant may be heated. Once the refrigerant is heated it may flow back into the indoor unit 204 as described herein.

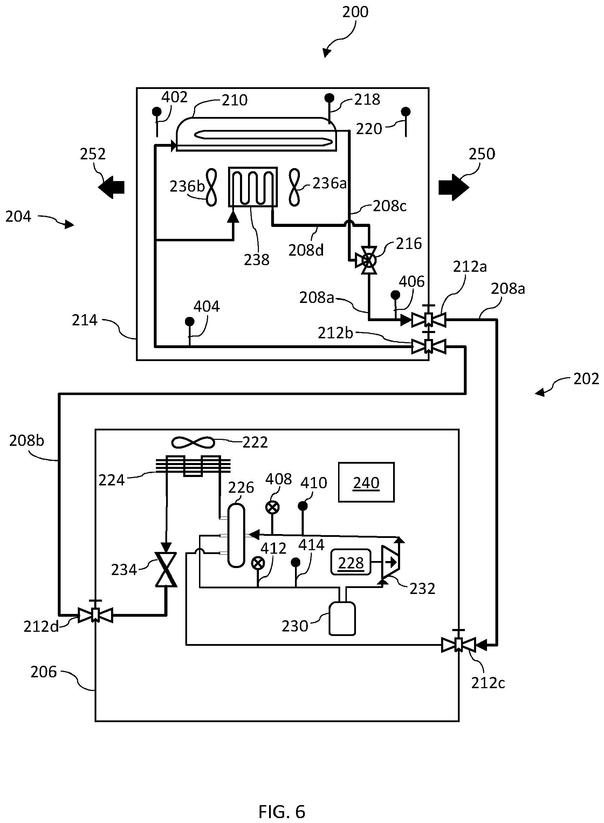

Reference is now made to Figure 6, which shows a schematic illustration of the heat pump system 200 during a defrost cycle. The defrost cycle as depicted in Figure 6 may operate with or without the secondary radiating storage 238. During the defrost cycle, the heat pump system 200 may operate such that the heat is transferred from the room to the refrigerant via the indoor unit 204. While the defrost cycle is described based on the heat pump system 200, the heat pump system 100 of Figure 1 may undergo a similar defrost cycle.

The defrost cycle may be used when the outdoor unit 206 is at freezing temperature or close to a freezing temperature. The defrost cycle may be used when the one or more sensors detects ice surrounding a housing of the outdoor unit 206. The defrost cycle as described herein may be started by the controller 240. The controller may start the defrost cycle when a temperature of the outdoor unit 206 is below a threshold temperature.

During the defrost cycle, the refrigerant may travel in the same flow directions as it would flow during the cooling cycle. For example, the refrigerant may exit the outdoor unit 206 via the fourth purge interface unit 212d. The refrigerant may travel via the pipe 208b from the fourth purge interface unit 212d to the indoor unit 204 and/or the second purge interface unit 212b. However, during the defrost cycle, the room housing the indoor unit 204 will still receive heat from the radiating storage 210 while defrosting the outdoor unit 106/206.

During the defrost cycle, the refrigerant may not transfer heat into the radiating storage 210. The refrigerant and/or the radiating storage 210 may still be heated from heat received during the heating cycle, such that the radiating storage 210 may continuously transfer heat to the room via radiation, convection, and/or conduction. The refrigerant may flow from the radiating storage 210 towards the outdoor unit 206. The heat from the refrigerant may transfer to the outdoor unit 206, thereby defrosting the outdoor unit 206. Once heat is transferred to the outdoor unit 206, at a second defrost cycle of the refrigerant, the refrigerant may receive heat from the radiating storage 210 and use the heat received from the radiating storage 210 to transfer to, and defrost, the outdoor unit 106/206.

During the defrost cycle, the refrigerant may not be transferring heat into the indoor heat exchanger 238. The refrigerant and/or the indoor heat exchanger 238 may still be heated from the heating cycle, such that the indoor heat exchanger 238 may continuously transfer heat to the room via convection. The refrigerant may flow from the indoor heat exchanger 238 towards the outdoor unit 206. The heat from the refrigerant may transfer to the outdoor unit 206, thereby defrosting the outdoor unit 206. Once heat is transferred to the outdoor unit 206, at a second defrost cycle of the refrigerant, the refrigerant may receive heat from the indoor heat exchanger 238 and use the heat received from the indoor heat exchanger 238 to transfer to, and defrost, the outdoor unit 206.

For a system including two or more streams of refrigerant, such as system 200 depicted in Figure 6, the two or more streams of refrigerant may be converged into a single stream of refrigerant using a valve, such as the three-way valve 216. The refrigerant may then flow from the three-way valve 216 towards the first purge interface unit 212a via the pipe 208a. The refrigerant may then flow from the first purge interface unit 212a and/or from the indoor unit 204 to the outdoor unit 206. In the outdoor unit 206, the heat may be released from the refrigerant, such that the outdoor unit 206 is defrosted.

The controller 240 may be configured to monitor the temperature of the outdoor unit 206 while operating a heating cycle at the heat pump system 200. The controller 240 may be configured to start the defrost cycle when a temperature of the outdoor unit 206 is below a threshold temperature.

The controller 206 may be configured to execute a method for defrosting an outdoor unit 206 of the heat pump system 202. The method for defrosting an outdoor unit 206 of the heat pump system 202 may include detecting a need for a defrost cycle. Detecting a need for a defrost cycle may include monitoring a temperature sensor located outside the outdoor unit 206. Detecting a need for a defrost cycle may include monitoring the outdoor temperature. Detecting a need for a defrost cycle may include receiving an outdoor temperature, from one or more temperature sensors, wherein the outdoor temperature is lower than a predetermined threshold temperature. Detecting a need for a defrost cycle may include setting a timer or watching a clock, such that the defrost cycle is started every 25 to 60 minutes during the heating cycle. Additionally, the controller may only start the defrost cycle start only when the outside temperature is measured to be lower than a predetermined threshold temperature, and therefore, prevents unnecessary defrost cycles and preserves energy in the system.

The method for defrosting an outdoor unit 206 of the heat pump system 200 may include switching the heat pump system 200 from a heating mode to a cooling mode until the temperature of a heat exchanger of the outdoor unit 206 rises above a threshold temperature. The method for defrosting an outdoor unit 206 of the heat pump system 200 may include switching the heat pump system 200 from the cooling mode to the heating mode once the temperature of the outdoor unit 206 is above the threshold temperature.

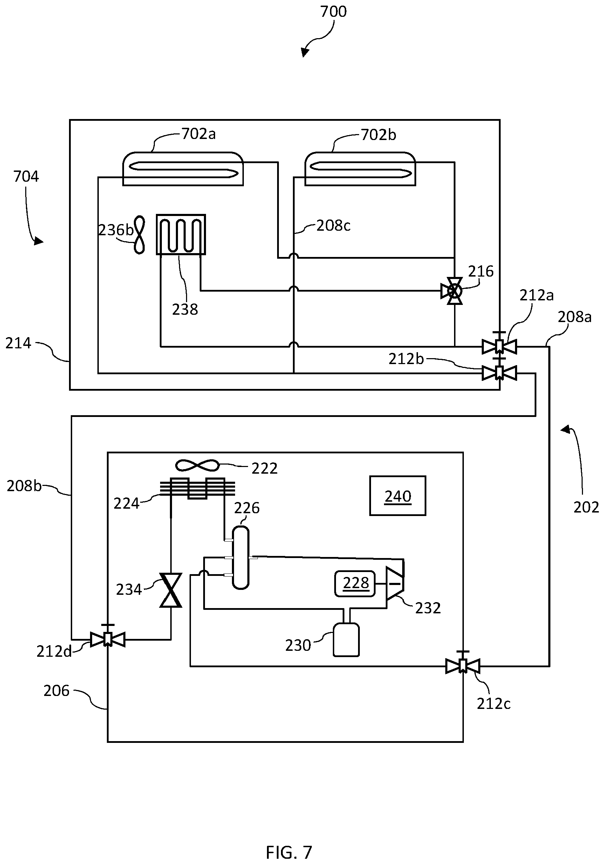

Reference is now made to Figure 7, which shows a schematic illustration of a heat pump system 700 comprising a plurality of radiating storages. The system 700 may include one or more components similar to or identical to at least one of the heat pump system 100/200 as described herein. The system 700 may include a plurality of radiating storages 702a/702b. The radiating storages 702a/702b may be similar to, identical to, and/or different from the radiating storages 110/210/300. The radiating storages 702a/702b may be connected in parallel. The radiating storages 702a/702b may be both connected to the second end of the three-way valve 216. The radiating storages 702a/702b may be both connected to a second three-way valve, which may be connected to the second end of the three-way valve 216. Similarly, the radiating storages 702a/702b may be connected to the second purge interface unit 212b via one or two three-way valves.

During a heating cycle, the refrigerant flowing into each of the radiating storages 702a/702b may have a similar temperature. During a cooling cycle, the refrigerant flowing out of each of the radiating storages 702a/702b may have a similar temperature.

The PCM of one of the radiating storages 702a/702b may be the same than a PCM of another one of the radiating storages 702a/702b. Thus, during a heating cycle, the refrigerant flowing out of each of the radiating storages 702a/702b may have a similar temperature. During a cooling cycle, the refrigerant flowing into of each of the radiating storages 702a/702b may have a similar temperature.

Additionally, the plurality of radiating storages 702a/702b may each include a PCM, and the PCM of one of the radiating storages 702a/702b may be different than a PCM of another one of the radiating storages 702a/702b. Thus, during a heating cycle, the refrigerant flowing out of each of the radiating storages 702a/702b may have a different temperature. During a cooling cycle, the refrigerant flowing into of each of the radiating storages 702a/702b may have a different temperature.

Two or more of the radiating storages 702a/702b may have the same material composition. Two or more of the radiating storages 702a/702b may have the same phase transitions and/or phase transition temperatures. Additionally, two or more of the radiating storages 702a/702b may have different material compositions. Two or more of the radiating storages 702a/702b may have different phase transitions and/or phase transition temperatures. For example, one of the radiating storages 702a/702b may have a melting temperature associated with PCMs configured to heat a room (e.g., having a melting temperature of between 45 to 75 degrees Celsius) and a second of the radiating storages 702a/702b may have a melting temperature associated with PCMs configured to cool a room (e.g., having a melting temperature of between -5 to -15 degrees Celsius).

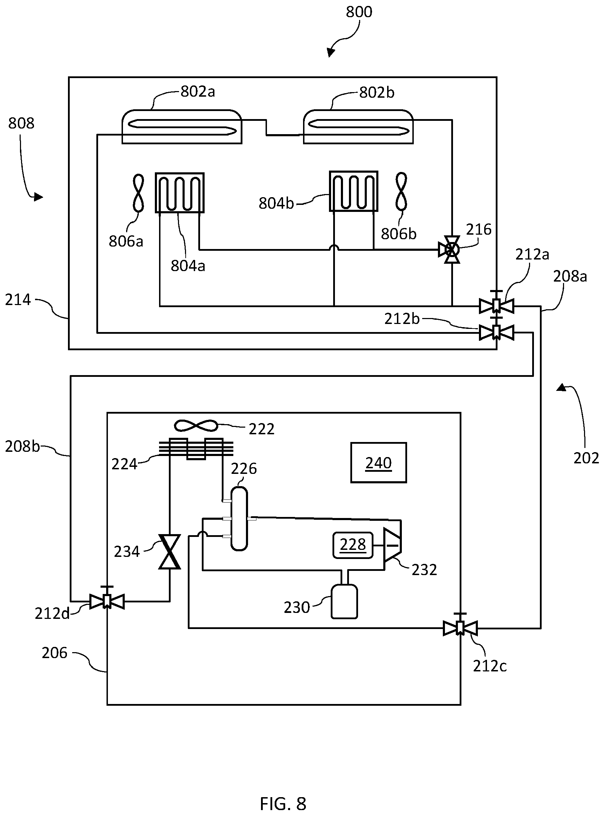

Reference is now made to Figure 8, which shows a schematic illustration of another heat pump system 800 comprising a plurality of radiating storages. The heat pump system 800 may include one or more components similar to or identical to at least one of the heat pump system 100/200 as described herein.

The heat pump system 800 may include a plurality of radiating storages 802a/802b. The plurality of radiating storages 802a/802b may be similar to, identical to, and/or different from the radiating storages 110/210/300/702a/702b. The radiating storages 802a/802b may be connected in series. The radiating storages 802a/802b may be serially connected to the second end of the three-way valve 216. The radiating storages 802a/802b may be serially connected to the second purge interface unit 212b. The second radiating storage 802b may be disposed between the three-way valve 216 and the first radiating storage 802a.

The PCM of one of the radiating storages 802a/802b may be the same than a PCM of another one of the radiating storages 802a/802b. Thus, during a heating cycle, the refrigerant flowing out of each of the radiating storages 802a/802b may have a different temperature. During a cooling cycle, the refrigerant flowing into of each of the radiating storages 802a/802b may have a different temperature.

Additionally, the plurality of radiating storages 802a/802b may each include a PCM, and the PCM of one of the radiating storages 802a/802b may be different than a PCM of another one of the radiating storages 802a/802b. Thus, during a heating cycle, the refrigerant flowing out of each of the radiating storages 802a/802b may have a different temperature. During a cooling cycle, the refrigerant flowing into of each of the radiating storages 802a/802b may have a different temperature.

Two or more of the plurality of radiating storages 802a/802b may have the same material composition. Two or more of the radiating storages 802a/802b may have the same phase transitions and/or phase transition temperatures. Two or more of the radiating storages 802a/802b may have different material compositions. Additionally, two or more of the radiating storages 802a/802b may have different phase transitions and/or phase transition temperatures. For example, one of the radiating storages 802a/802b may have a melting temperature associated with PCMs configured to heat a room (e.g., having a melting temperature of between 45 to 75 degrees Celsius) and a second of the radiating storages 802a/802b may have a melting temperature associated with PCMs configured to cool a room (e.g., having a melting temperature of between -5 to -15 degrees Celsius).

The system 800 may include a plurality of indoor heat exchangers 804a/804b. The plurality of indoor heat exchangers 804a/804b may include a plurality of fans 806a/806b. The plurality of indoor heat exchangers 804a/804b may be coupled in parallel and/or in series. The plurality of indoor heat exchangers 804a/804b may be both connected to the third end of the three-way valve 216. The plurality of indoor heat exchangers 804a/804b may be both connected to a second three-way valve, which may be connected to the third end of the three-way valve 216. The plurality of indoor heat exchangers 804a/804b may be connected to the second purge interface unit 212b via one or two three-way valves. The plurality of indoor heat exchangers 804a/804b may include one or more radiating storages which may have a same or different material composition.

The heat pump system 100/200/700/800 may include a plurality of indoor units 104/204/704/808. The plurality of indoor units 104/204/704/808 may include a plurality of radiating storages, such as the plurality of radiating storages 702a/702b/802a/802b. The plurality of indoor units 104/204/704/808 may be coupled to at least one outdoor unit 106/206. The plurality of indoor units 104/204/704/808 may be configured to be positioned within the same room, thereby increasing the rate of heat transfer in relation to the rate of heat transfer when the room has only one indoor units 104/204/704/808. Additionally, the plurality of indoor units 104/204/704/808 may be configured to be placed in different rooms.

The radiating storages 110/210/300/702a/702b/802a/802b may be modular. The radiating storages may be removeable from the indoor units 104/204/704/808. For example, during a colder season, the radiating storages 110/210/300/702a/702b/802a/802b may be replaced with a radiating storages 110/210/300/702a/702b/802a/802b having a melting temperature associated with a heating mode. As another example, during a warmer season, the radiating storages 110/210/300/702a/702b/802a/802b may be replaced with a radiating storages 110/210/300/702a/702b/802a/802b having a melting temperature associated with a cooling mode. The indoor units 104/204/704/808 may include compartments configured to receive one or more radiating storages 110/210/300/702a/702b/802a/802b. The indoor units 104/204/704/808 may include compartments configured to receive two or more radiating storages 110/210/300/702a/702b/802a/802b, thereby enabling placement of two or more different radiating storages 110/210/300/702a/702b/802a/802b having customizable thermal properties (such as, for example, the amount, the mass, the phase change type, the phase change temperature, and the like).

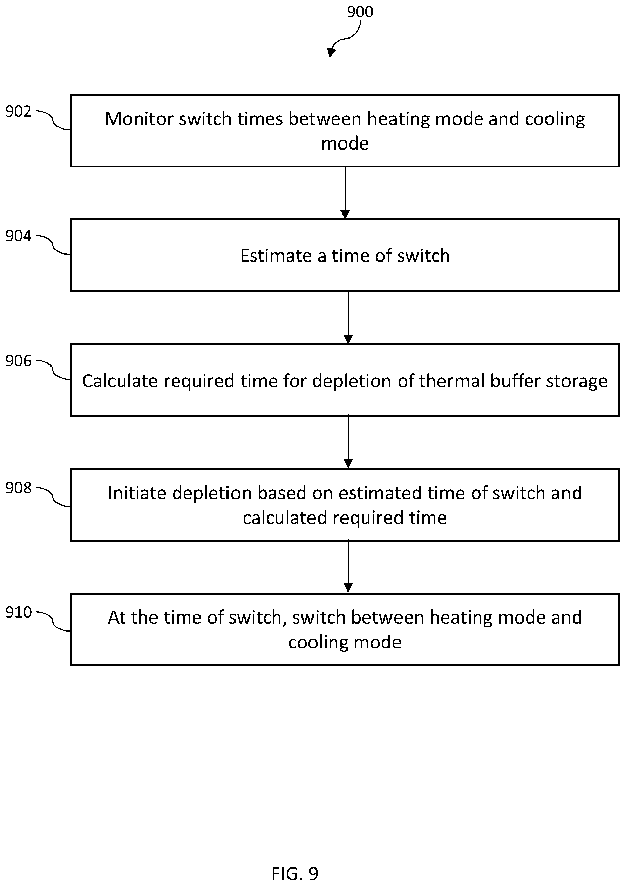

Reference is now made to Figure 9, which shows a flow chart for a method of switching between a heating mode and a cooling mode of the system.

The controller 140/240 of the system 100/200/700/800 may be configured to perform a method for switching between a heating mode and a cooling mode, such as the method 900 depicted in Figure 9. The method may include, at step 902, monitoring switch times between heating mode and cooling mode. The method, at step 902, may include monitoring an outdoor temperature outside of the room and/or outside of the outdoor unit. The method may include receiving data associated with the weather predictions for upcoming hours. The data may be received from the memory module, the user interface, and/or from online information. The method may include identifying whether the current mode of operation of the heat pump will need to change in the upcoming hours, based on any one or more of the received data and/or one or more of the monitored temperatures.

The method may include, at step 904, estimating a time of switch. The time of switch may include the time in which the mode of operation of the heat pump would change from heating the room to cooling the room (or from cooling the room to heating the room). The method may include measuring a room temperature of the room that the radiating storage is placed. The method may include monitoring the temperature in the room. The method may include determining whether a change in mode of operation will be required in the nearing hours. For example, in an environment where the night is cold and the day is hot, the method may include identifying a needed switch between the heating cycle and the cooling cycle. The method may include identifying a need of switching from a cooling cycle to a heating cycle at an estimated switching time between noon and midnight. The method may include identifying a need of switching from a heating cycle to a cooling cycle at an estimated switching time between midnight and noon.

The radiating storage 110/210/300702a/702b/802a/802b as described herein may require time to deplete thermal energy when switching from a heating mode to a cooling mode. Similarly, the radiating storage 110/210/300702a/702b/802a/802b as described herein may require time to gain thermal energy when switching from a cooling mode to a heating mode. Thus, the method may include calculating an amount of time required for depletion of a thermal energy of the radiating storage of the system, from a first temperature of the radiating storage in the heating mode to the room temperature, or calculating an amount of time required for gaining a thermal energy sufficient for a phase change of the radiating storage. The method may include, at step 906, calculating a required time for depletion and/or gain of the radiating storage 110/210/300.

Once the amount of time required is calculated, the method may include calculating an estimated time of switch. The estimated time of switch may be the identified switching time minus the amount of time required to deplete thermal energy from the radiating storages when switching from a heating mode to a cooling mode or the amount of time required to gain thermal energy when switching from a cooling mode to a heating mode. The method may include, at step 908, initiating depletion (or gain) of the radiating storage based on the estimated time of switch. The method may include initiating depletion (or gain) of the thermal energy by stopping the refrigerant from reaching the radiating storage.

The method may include, at step 910, at the time of switch, switching between the heating mode and the cooling mode. The method may include enabling the refrigerant to flow from the outdoor unit to the indoor unit and back into the outdoor unit, wherein the refrigerant is not heated in the outdoor unit in preparation for a cooling cycle within the indoor unit. The method may include enabling the refrigerant to flow from the outdoor unit to the indoor unit and back into the outdoor unit, wherein the refrigerant is not cooled in the outdoor unit in preparation for a heating cycle within the indoor unit.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

Although the subj ect matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. The present application also discloses:
Clause 1. A system comprising:
   an outdoor unit,
   an indoor unit, and
   at least one pipe comprising a refrigerant and providing, via the refrigerant, fluid communications between the indoor unit and the outdoor unit;
   wherein the indoor unit comprises a radiating storage, the radiating storage comprising a phase change material (PCM), and wherein the radiating storage is configured to transfer heat to or from the refrigerant and transfer the heat to or from a room, and wherein the refrigerant is thermally coupled to the radiating storage via the at least one pipe.
Clause 2. The system of clause 1, wherein the radiating storage comprises one or more of: a plate, one or more fins, or a cylinder.
Clause 3. The system of clause 1, further comprising:
   a user interface;
   at least one temperature sensor; and
   a controller configured to:
      monitor temperatures using the at least one temperature sensor, receive user settings from the user interface, and
   determine an operation mode of the indoor unit.
Clause 4. The system of clause 3, further comprising a heat exchanger, wherein the heat exchanger comprises a fan configured to direct an air flow between the heat exchanger and to a room including the indoor unit, and wherein the controller is further configured to operate the fan.
Clause 5. The system of clause 4, wherein the indoor unit comprises a three-way valve connected to the least one pipe, wherein the controller is configured to operate the three-way valve to control the refrigerant flow between the radiating storage and the heat exchanger.
Clause 6. The system of clause 1, wherein the phase change material comprises a first phase change temperature associated with a cooling cycle, and a different second phase change temperature associated with a heating cycle.
Clause 7. The system of clause3, wherein the indoor unit comprises a second fan configured to direct an air flow between the radiating storage and a room including the indoor unit, and wherein the controller is further configured to operate the second fan.
Clause 8. The system of clause 3, wherein the at least one temperature sensor is positioned within a room housing the indoor unit.
Clause 9. The system of clause 3, wherein the at least one temperature sensor is positioned in the indoor unit or the outdoor unit.
Clause 10. The system of clause 3, wherein the controller is configured to switch the heat pump system between a heating mode and a cooling mode.
Clause 11. The system of clause 1, wherein the indoor unit comprises a removeable decorative sleeve.
Clause 12. The system of clause 1, wherein the radiating storage comprises at least one storage portion configured to emit heat.
Clause 13. The system of clause 1, wherein the phase change material comprises a melting temperature within the range of 45 to 60 degrees Celsius.
Clause 14. The system of clause 1, wherein the phase change material comprises a melting temperature within the range of -5 to 10 degrees Celsius.
Clause 15. The system of clause 1, wherein the phase change material is an adaptable phase change material comprising an adaptable melting temperature.
Clause 16. The system of clause 1, wherein the phase change material is organic and/or inorganic.
Clause 17. The system of clause 1, wherein the radiating storage comprises a plurality of radiating storage components of different types of phase change materials.
Clause 18. The system of clause 1, wherein an energy that the radiating storage radiates in an hour is between 5% and 25% of an energy rating of the system.
Clause 19. The system of clause 1, wherein 0% to 50% of heat flow from the system is provided by the radiating storage.
Clause 20. The system of clause 1, wherein the indoor unit comprises one or more vents positioned on one or more side surfaces of the indoor unit.
Clause 21. The system of clause 1, wherein the outdoor unit, indoor unit, and the at least one pipe are comprised in a heat pump.
Clause 22. A system comprising:
   an outdoor unit,
   an indoor unit, and
at least one pipe comprising a refrigerant and providing, via the refrigerant, fluid communications between the indoor unit and the outdoor unit;
wherein the indoor unit comprises a radiating storage, wherein the radiating storage is configured to absorb heat from a surrounding of the indoor unit and transfer the absorbed heat to the refrigerant, and wherein the at least one pipe is in contact with the radiating storage such that the refrigerant is in thermal communication with the radiating storage.
Clause 23. A method comprising:
   defrosting an outdoor unit of a heat pump system by:
   switching, based on a temperature of a heat exchanger, of the outdoor unit rising above a threshold temperature; and
   switching the heat pump system from the heating mode to the cooling mode.
Clause 24. The method of clause 23, wherein the defrosting is in response to at least one of a clock, a timer, or an outdoor temperature sensor.
Clause 25. A method for switching between a heating mode and a cooling mode of a heat pump system comprising a radiating storage, the method comprising:
   predicting a future time of a switching between a heating mode and a cooling mode of the heat pump system;
   measuring a room temperature of a room where the radiating storage is placed;
   calculating an amount of time required for depletion of a thermal energy of the radiating storage from a first temperature of the radiating storage in the heating mode to the room temperature;
   initiating depletion of the thermal energy, at a start time, based on the predicted future time and the calculated amount of time; and
   at the predicted future time, switching the heat pump between the heating mode and the cooling mode.
Clause 26. The method of clause 25, wherein the predicting of the future time of switch is based on:
   an amount of thermal energy released by the radiating storage when changing from the first temperature to the room temperature; and
   a thermal conductivity between the radiating storage and the room.
Clause 27. The method of clause 25, further comprising monitoring a plurality of switching times between the heating mode and the cooling mode in the room, and wherein the amount of time required for depletion of the thermal energy is based on the plurality of switching times.
Clause 28. An apparatus comprising:
   a radiating storage comprising a phase change material (PCM); and
   at least one pipe configured to contain a refrigerant,
   wherein the radiating storage is configured to transfer heat to or from the refrigerant and transfer the heat to or from a room, and wherein the refrigerant is thermally coupled to the radiating storage via the at least one pipe.
Clause 29. The apparatus of clause 28, wherein the radiating storage comprises one or more of: a radiating plate, one or more fins, or a body.
Clause 30. The apparatus of clause 28, further comprising:
   a user interface;
   at least one temperature sensor; and
   a controller configured to:
      monitor temperatures using the at least one temperature sensor, receive user settings from the user interface, and
      determine an operation mode of the radiating storage.
Clause 31. The apparatus of clause 28, further comprising a three-way valve connected to the least one pipe, wherein the controller is configured to operate the three-way valve to control the refrigerant flow between the radiating storage and a heat exchanger.
Clause 32. The apparatus of clause 28, wherein phase change material comprises a first phase change temperature associated with a cooling cycle, and a different second phase change temperature associated with a heating cycle.
Clause 33. The apparatus of clause 28, further comprising a fan configured to direct an air flow between the radiating storage and a room, wherein the controller is further configured to operate the fan.
Clause 34. The apparatus of clause 30, wherein the at least one temperature sensor is positioned within a room housing the indoor unit.
Clause 35. The apparatus of clause 30, wherein the at least one temperature sensor is positioned in an indoor unit or an outdoor unit.
Clause 36. The apparatus of clause 30, wherein the controller is configured to switch the apparatus between a heating mode and a cooling mode.
Clause 37. The apparatus of clause 28, wherein the radiating storage comprises a removeable decorative sleeve.
Clause 38. The apparatus of clause 28, wherein the radiating storage comprises at least one storage portion configured to emit heat.
Clause 39. The apparatus of clause 28, wherein the phase change material comprises a melting temperature within the range of 45 to 60 degrees Celsius.
Clause 40. The apparatus of clause 28, wherein the phase change material comprises a melting temperature within the range of -5 to 10 degrees Celsius.
Clause 41. The apparatus of clause 28, wherein the phase change material is an adaptable phase change material comprising an adaptable melting temperature.
Clause 42. The apparatus of clause 28, wherein the phase change material is organic and/or inorganic.
Clause 43. The apparatus of clause 28, wherein the radiating storage comprises a plurality of radiating storage components of different types of phase change materials.
Clause 44. The apparatus of clause 28, wherein an energy that the radiating storage radiates in an hour is between 5% and 25% of an energy rating of a heating system.
Clause 45. The apparatus of clause 28, wherein 0% to 50% of a heat flow from a heating system is provided by the radiating storage.
Clause 46. The apparatus of clause 28, wherein the radiating storage comprises one or more vents positioned on one or more side surfaces of the indoor unit.

## Claims

1. An apparatus comprising:
a radiating storage comprising a phase change material (PCM); and
at least one pipe configured to contain a refrigerant,
wherein the radiating storage is configured to transfer heat between the refrigerant and a room; and
wherein the refrigerant is thermally coupled to the radiating storage via the at least one pipe.

2. The apparatus of claim 1, wherein the radiating storage comprises one or more of: a radiating plate, one or more fins, or a body containing the PCM.

3. The apparatus of claim 1 or claim 2, further comprising:
a user interface;
at least one temperature sensor; and
a controller configured to:
monitor temperatures of the room using the at least one temperature sensor;
receive user settings via the user interface; and
determine, based on the temperatures of the room and the user settings, an operation mode of the radiating storage.

4. The apparatus of claim 3, further comprising a three-way valve connected to the at least one pipe, wherein the controller is further configured to operate the three-way valve to control a refrigerant flow between the radiating storage and a heat exchanger.

5. The apparatus of claim 3 or claim 4, further comprising a fan configured to direct an air flow between the radiating storage and the room, and wherein the controller is further configured to operate the fan.

6. The apparatus of any of the preceding claims, wherein the PCM comprises a first phase change temperature associated with a cooling cycle and a different second phase change temperature associated with a heating cycle.

7. A system comprising:
an outdoor unit;
an indoor unit inside a room; and
at least one pipe comprising a refrigerant and providing, via the refrigerant, fluid communications between the indoor unit and the outdoor unit,
wherein the indoor unit comprises a radiating storage, wherein the radiating storage comprises a phase change material (PCM), wherein the radiating storage is configured to transfer heat between the refrigerant and the room, and wherein the refrigerant is thermally coupled to the radiating storage via the at least one pipe.

8. The system of claim 7, wherein the radiating storage comprises one or more of: a plate, one or more fins, or a cylinder.

9. The system of claim 7 or claim 8, further comprising:
a user interface;
at least one temperature sensor; and
a controller configured to:
monitor temperatures of the room using the at least one temperature sensor;
receive user settings from the user interface; and
determine, based on the temperatures of the room and the user settings, an operation mode of the indoor unit.

10. The system of claim 9, further comprising a heat exchanger, wherein the heat exchanger comprises a fan configured to direct an air flow between the heat exchanger and the room, and wherein the controller is further configured to operate the fan.

11. The system of claim 10, wherein the indoor unit comprises a three-way valve connected to the at least one pipe, and wherein the controller is configured to operate the three-way valve to control a refrigerant flow between the radiating storage and the heat exchanger.

12. The system of any of claims 7 to 11, wherein the PCM comprises a first phase change temperature associated with a cooling cycle and a different second phase change temperature associated with a heating cycle.

13. A method for switching between a heating mode and a cooling mode of a heat pump system comprising a radiating storage, the method comprising:
predicting a future time of a switching between the heating mode and the cooling mode;
measuring a room temperature of a room where the radiating storage is placed;
calculating an amount of time required for depletion of thermal energy stored by the radiating storage such that the radiating storage is at the room temperature;
initiating, at a start time determined based on the predicted future time and the calculated amount of time, the depletion of the thermal energy; and
at the predicted future time, switching the heat pump system between the heating mode and the cooling mode,
wherein the radiating storage comprises a phase change material (PCM).

14. The method of claim 13, wherein the predicting of the future time of the switching between the heating mode and the cooling mode is based on:
an amount of thermal energy released by the radiating storage for the radiating storage to be at the room temperature; and
a thermal conductivity between the radiating storage and the room.

15. The method of claim 13 or claim 14, further comprising monitoring a plurality of switching times between the heating mode and the cooling mode in the room, and wherein the amount of time required for the depletion of the thermal energy is based on the plurality of switching times.
